# EUROPEAN PATENT SPECIFICATION

(11) **EP 1 540 473 B1**
(45) Date of publication and mention of the grant of the patent: **29.02.2012**
(21) Application number: 03808965.2
(22) Date of filing: 29.08.2003
(51) Int. Cl.: H04L 29/06, G06F 13/10

(54) **SYSTEM AND METHOD FOR NETWORK INTERFACING IN A MULTIPLE NETWORK ENVIRONMENT**
SYSTEM UND VERFAHREN ZUR NETZWERKANSCHALTUNG IN EINER MEHRFACH-NETZWERK-UMGEBUNG
SYSTEME ET PROCEDE PERMETTANT D'ASSURER UNE INTERFACE RESEAU DANS UN ENVIRONNEMENT A MULTIPLES RESEAUX

(30) Priority: 29.08.2002 US 230643; 30.08.2002 US 407165 P; 04.09.2002 US 408207 P; 06.09.2002 US 408617 P; 11.09.2002 US 410022 P; 17.09.2002 US 411294 P; 18.10.2002 US 419354 P; 24.10.2002 US 420901 P; 12.11.2002 US 425959 P; 18.11.2002 US 298817; 21.11.2002 US 302474; 18.12.2002 US 434503 P; 02.01.2003 US 437887 P; 06.01.2003 US 337029; 06.01.2003 US 336983; 14.01.2003 US 439951 P; 24.01.2003 US 442360 P; 20.03.2003 US 456266 P; 20.03.2003 US 456322 P; 20.03.2003 US 456260 P; 20.03.2003 US 456265 P; 10.06.2003 US 477279 P; 11.06.2003 US 478106 P
(43) Date of publication of application: 15.06.2005
(73) Proprietor: Broadcom Corporation, Irvine, CA 92617 (US)
(72) Inventor: ELZUR, Uri, Irvine, CA 92606 (US); FAN, Frankie, Diamond Bar, CA 91765 (US); LINDSAY, Steve, Mission Viejo, CA 92692 (US); MCDANIEL, Scott, S., Villa Park, CA 92861 (US)
(74) Representative: Jehle, Volker Armin
(86) International application number: PCT/US2003/027340
(87) International publication number: WO 2004/036805

(56) References cited:
- US-A- 5 941 969
- US-A- 6 041 356
- US-A- 6 049 528
- US-A- 6 157 965
- US-A1- 2001 023 460
- US-B1- 6 243 785
- US-B1- 6 253 334
- US-B1- 6 421 728

## Description

This application makes reference to, claims priority to and claims benefit from United States Provisional Patent Application Serial No. 60/477,279, entitled "System and Method for Network Interfacing in a Multiple Network Environment" and filed on June 10, 2003; United States Provisional Patent Application Serial No. 60/478,106, entitled "System and Method for Network Interfacing" and filed on June 11, 2003; United States Provisional Patent Application Serial No. 60/408,617, entitled "System and Method for TCP/IP Offload" and filed on September 6, 2002; United States Provisional Patent Application Serial No. 60/407,165, entitled "System and Method for TCP Offload" and filed on August 30, 2002; United States Provisional Patent Application Serial No. 60/456,265, entitled "System and Method for TCP Offload" and filed on March 30, 2003; United States Provisional Patent Application Serial No. 60/456,260, entitled "System and Method for Handling Out-of-Order Frames" and filed on March 20, 2003; United States Provisional Patent Application Serial No. 60/410,022, entitled "System and Method for TCP Offloading and Uploading" and filed on September 11, 2002; United States Patent Application Serial No. 10/298,817, entitled "System and Method for TCP Offloading and Uploading" and filed on November 18, 2002; United States Provisional Patent Application Serial No. 60/411,294, entitled "System and Method for Handling Partially Processed Frames" and filed on September 17, 2002; United States Patent Application Serial No. 10/302,474, entitled "System and Method for Handling Frames in Multiple Stack Environments" and filed on November 21, 2002; United States Provisional Patent Application Serial No. 60/408,207, entitled "System and Method for Fault Tolerant TCP Offload" and filed on September 4, 2002; United States Patent Application Serial No. 10/337,029, entitled "System and Method for Fault Tolerant TCP Offload" and filed on January 6, 2003; United States Provisional Patent Application Serial No. 60/405,539, entitled "Remote Direct Memory Access over TCP/IP using Generic Buffers for Non-Posting TCP" and filed on August 23, 2002; United States Provisional Patent Application Serial No. 60/398,663, entitled "Dual TCP/IP Stacks Connection Management for Winsock Direct (WSD)" and filed on July 26, 2002; United States Provisional Patent Application Serial No. 60/434,503, entitled "System and Method for Handling Multiple Stack Environments" and filed on December 18, 2002; United States Patent Application Serial No. 10/336,983, entitled "System and Method for Handling Multiple Stack Environments" and filed on January 6, 2003; United States Provisional Patent Application Serial No. 60/403,817, entitled "One Shot RDMA Having Only a 2 Bit State" and filed on August 14, 2002; United States Provisional Patent Application Serial No. 60/404,709, entitled "Optimizing RDMA for Storage Applications" and filed on August 19, 2002; United States Patent Application Serial No. 60/419:354, entitled "System and Method for Statistical Provisioning" and filed on October 18, 2002; United States Patent Application Serial No. 60/420,901, entitled "System and Method for Statistical Provisioning" and filed on October 24, 2002; United States Patent Application Serial No. 60/439,951, entitled "System and Method for Statistical Provisioning" and filed on January 14, 2003; United States Patent Application Serial No. 60/442,360, entitled "System and Method for Statistical Provisioning" and filed on January 24, 2003; United States Provisional Patent Application Serial No. 60/425,959, entitled "Joint Memory Management for User Space and Storage" and filed on November 12, 2002; United States Provisional Patent Application Serial No. 60/456,266, entitled "Self-Describing Transport Protocol Segments" and filed on March 20, 2003; United States Provisional Patent Application Serial No. 60/437,887, entitled "Header Alignment and Complete PDU" and filed on January 2, 2003; United States Provisional Patent Application Serial No. 60/456,322, entitled "System and Method for Handling Transport Protocol Segments" and filed on March 20, 2003; and United States Patent Application Serial No. 10/230,643, entitled "System and Method for Identifying Upper Layer Protocol Message Boundaries" and filed on August 29, 2002.

### FIELD OF THE INVENTION

Certain embodiments of the invention relate to network interfaces. More specifically, certain embodiments of the invention relate to a method and system for network interfacing in a multiple networking environment.

### BACKGROUND OF THE INVENTION

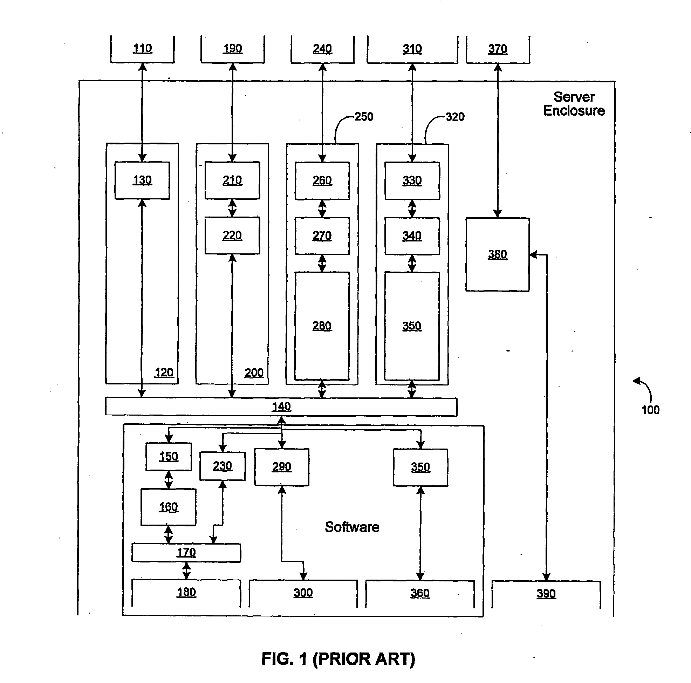

FIG. 1 shows a server 100 adapted to handle five types of network traffic. The first type of network traffic is typical network traffic such as, for example, common Ethernet network traffic including Internet protocol(IP) or other layer 3 (L3) technologies transporting small amounts of data and control information around the network. The first type of network traffic is handled by a first network traffic system including an Ethernet connector 110; a layer 2 (L2) network interface card(NIC) arrangement 120 including an L2 NIC 130; a peripheral component interconnect(PCI) bridge 140; an L2 NIC driver 150; a full-feature software transmission control protocol (TCP) stack 160; a socket service switch 170; and a socket service 180. The full-feature software TCP stack 160 supports socket services as well as other services.

The second type of network traffic is TCP accelerated traffic such as, for example, TCP running on top of IP. The protocol is used to move large data across conventional Ethernet networks. The server 100 offloads the TCP portion of the network traffic, thereby freeing server resources for running non-networking tasks. The second type of network traffic is handled by a second network traffic system including a TCP offload engine (TOE) that accelerates TCP traffic. The second network traffic system includes an Ethernet connector 190; a layer 4 (L4) offload adapter arrangement 200 including an L2 NIC 210 and a TCP processor 220; the PCI bridge 140; an L4 driver 230; the socket service switch 170; and the socket service 180. The TCP accelerated traffic is typically serviced by the socket service 180.

The third type of network traffic is storage traffic. Conventional storage systems use small computer system interface (SCSI) or Fibre Channel technologies to connect the server 100 to storage disks. Both of these technologies share a common software interface or service, namely SCSI miniport. Recently, a protocol has been developed that provides SCSI traffic to be run over a TCP/IP network. The recent protocol removes the need for SCSI or Fibre Channel network connections, thereby allowing the storage traffic to be run over the same network as used for networking (e.g., Ethernet). The third type of network traffic is handled by a third network traffic system including an adapter that implements the recent protocol and provides SCSI miniport service. The third network traffic system includes an Ethernet connector 240; a storage host bus adapter (HBA) arrangement 250 including an L2 NIC 260, a TCP processor 270 and an internet SCSI (iSCSI) processor 280; the PCI bridge 140; a SCSI driver 290; and a SCSI miniport service 300.

The fourth type of network traffic is interprocess communication (IPC) traffic. This type of network allows programs running on different servers to communicate quickly and with very low overhead. IPC networks are used with, for example, distributed applications, database servers and file servers. For example, IPC networks can be used when the computing power needed exceeds the capacity of a particular server or when multiple servers are used for ultra-reliable operation. This type of service is provided through a remote direct memory access (RDMA) interface (e.g., Winsock Direct) that directly interfaces with applications. The fourth type of network traffic is handled by a fourth network traffic system including an adapter that provides services as a dedicated, proprietary network (e.g., Infiniband products). The fourth network traffic system includes a proprietary network interface 310; an RDMA NIC arrangement 320 including an L2 NIC 330, an L4 processor and an RDMA processor 340; the PCI bridge 140; an RDMA driver 350; and an RDMA service 360 (e.g., Winsock Direct).

The fifth type of network traffic is any traffic relating to any type of operating system (OS) Agnostic Management Entity or device. These entities or devices monitor the state of the server 100 and transmit information relating to state and statistical values over the network. The fifth type of network traffic is handled by a fifth network traffic system that includes an Ethernet connector 370; a server management agent 380; and a keyboard/video/mouse service 390. The fifth network traffic system provides keyboard, video and mouse hardware services to the server 100 so that these interfaces can be redirected over the network to a central server management system.

The five network traffic systems supported by the server 100 use a substantial amount of space within the server and are typically quite costly. Combining the five types of networks is hindered on a number of fronts. For example, many operating systems insist that each connector have its own driver. Accordingly, each of the five network traffic systems has its own data and control paths. Furthermore, the use of proprietary network interfaces minimizes the possibility of integration. Thus, a number of hardware and software redundancies and inefficiencies remain.

Further limitations and disadvantages of conventional and traditional approaches will become apparent to one of skill in the art, through comparison of such systems with some aspects of the present invention as set forth in the remainder of the present application with reference to the drawings.

US 2001/023460 discloses a system for protocol processing in a computer network which has an intelligent network interface card (INIC) or communication processing device (CPD) associated with a host computer. The INIC assists the host for those message packets that are chosen for processing by host software layers. A communication control block for a message is defined that allows DMA controllers of the INIC to move data, free of headers, directly to or from a destination or source in the host. The context is stored in the INIC as a communication control block (CCB) that can be passed back to the host for message processing by the host. The INIC contains specialized hardware circuits that are much faster at their specific tasks than a general purpose CPU.

US-B2-6 253 334 deals with providing a fault-tolerant computer system which includes a processor and a memory, connected to a system bus. The system includes at least two mirrored circuits, at least two mirrored lO devices, a detection means and a re-route means. The two mirrored circuits each include an interface to the system bus, and an lO interface. The input/output interface of each of the mirrored circuits is connected to one of the two mirrored lO devices. Detection means detect a load imbalance in the data transfer between the system bus and either one of the two mirrored lO devices. In response to the detection of a load imbalance, the re-route means re-routes the data transfer between the system bus and the other one of the two mirrored lO devices.

### BRIEF SUMMARY OF THE INVENITON

According to the present invention, a server having the features of claim 1 and a method having the features of claim 8 are provided. Preferred embodiments of the invention are defined in the respective dependent claims.

Aspects of the present invention may be found in, for example, some embodiments of systems and methods that provide a network interface. In one embodiment, the present invention may provide a server. The server may include, for example, a network connector, a processor, a peripheral component interface (PCI) bridge and a unified driver. The processor may be coupled to the network connector and to the PCI bridge. The processor may be adapted, for example, to process a plurality of different types of network traffic. The unified driver may be coupled to the PCI bridge and may be adapted to provide drivers associated with the plurality of different types of network traffic.

In another embodiment, the present invention may provide a method for network interfacing. The method may include, for example, one or more of the following : handling a plurality of different types of network traffic via a layer 2 (L2) connector; processing the different types of network traffic in a single chip; and determining which of the different types of network traffic accesses software services via a single data path.

In yet another embodiment, the present invention may provide a method for network interfacing. The method may include, for example, one or more of the following: handling a plurality of different types of network traffic via a single Ethernet connector; processing the plurality of different types of network traffic using an L2 processor, a layer 3 (L3) processor, a layer 4 (L4) processor and an upper layer protocol (ULP) processor; and providing a unified data and control path.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 shows a block representation illustrating an embodiment of a server.
FIG. 2 shows a block representation illustrating an embodiment of a server according to the present invention.
FIG. 3 shows a block representation illustrating an embodiment of a server according to the present invention.

### DETAILED DESCRIPTION OF THE INVENTION

Some aspects of the present invention may be found in, for example, systems and methods that provide network interfaces. Some embodiments according to the present invention may provide systems and methods that combine networking functions. For example, in one embodiment according to the present invention, a common networking adapter, a storage adapter, an interprocess communication (IPC) adapter and a management adapter may be combined into a single device. Substantial savings in cost and space may be achieved, for example, by time-division-multiplexing the resources of shared blocks or by dynamically allocating fixed resources between the different network types. Shared blocks may be developed that provide features (e.g., functions) applicable to one or more of the protocols. Shared blocks may also house special services that may not be used by all of the protocols.

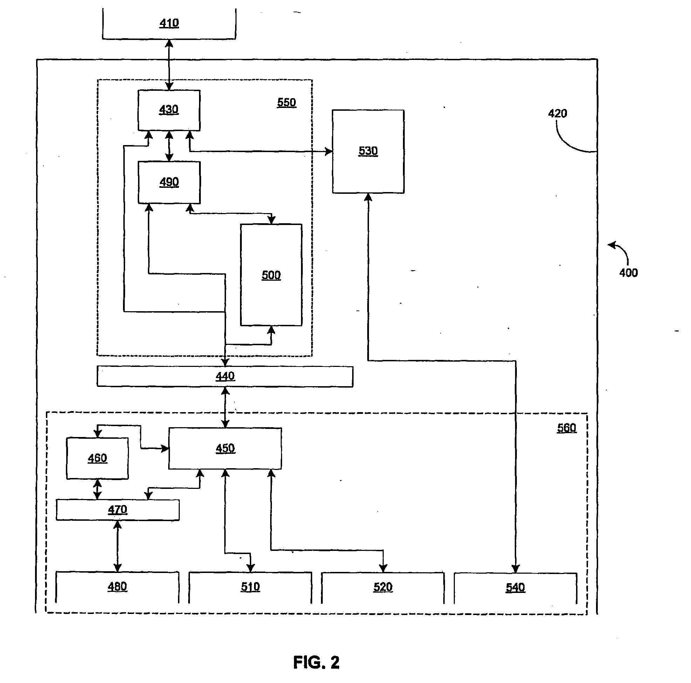

FIG. 2 shows a block representation illustrating an embodiment of a server 400 according to the present invention. The server 400 may include, for example, an Ethernet connector 410 and a server enclosure 420. The present invention also contemplates using one or more Ethernet connectors 410. For example, additional Ethernet connectors 410 may be used to provide enhanced performance, fault tolerance or teaming. The server 400 may be adapted to handle a plurality of different networks via the one or more Ethernet connectors 410. As illustrated, in one embodiment according to the present invention, the server 400 may handle five different types of network traffic. However, the present invention also contemplates handling more or less than five different types of network traffic.

A first type of network traffic that the server 400 can handle may be, for example, common network traffic such as, for example, Ethernet network traffic employing, for example, internet protocol (IP) technologies or other layer 3 (L3) technologies and transporting small amounts of data and control information around the network. The first type of network traffic may be handled by a first network traffic system that may include, for example, the Ethernet connector 410, a layer 2 (L2) network interface card (NIC) 430, a peripheral component interconnect (PCI) bridge 440, an unified driver 450, a software transmission control protocol (TCP) processor 460, a socket service switch 470 and a socket service 480. The Ethernet connector 410 may be coupled to the L2 NIC 430 which, in turn, may be coupled to the PCI bridge 440. The PCI bridge 440 may be coupled to the unified driver 450 which, in turn, may be coupled to the software TCP processor 460. The software TCP processor 460 may be coupled to the socket service switch 470 which, in turn, may be coupled to the socket service 480. The software TCP processor 460 may support, for example, socket services as well as other types of services.

A second type of network traffic that the server 400 can handle may be, for example, TCP accelerated traffic such as, for example, TCP running on top of IP. TCP over IP may be used to move large amounts of data across Ethernet networks. The server 400 may offload the TCP portion of the network traffic, thereby freeing server resources for running non-networking tasks. The second type of network traffic may be handled by a second network traffic system including, for example, a TCP offload engine (TOE) that can accelerate TCP traffic. The second network traffic system may include, for example, the Ethernet connector 410, the L2 NIC 430, a TCP processor 490, the PCl bridge 440, the unified driver 450, the socket service switch 470 and the socket service 480. The Ethernet connector 410 may be coupled to the L2 NIC 430 which, in turn, may be coupled to the TCP processor 490. The TCP processor 490 may be coupled to the PCl bridge which, in turn, may be coupled to the unified driver 450. The unified driver 450 may be coupled to the socket service switch 470 which, in turn, may be coupled to the socket service 480. The TCP accelerated traffic may be serviced by, for example, the socket service 480 or other types of services.

A third type of network traffic that the server 400 may handle may be, for example, storage traffic. The third type of network traffic may include, for example, a protocol (e.g., Internet SCSI (iSCSI)) that provides small computer system interface (SCSI) over a TCP/IP network: By using ISCSI, proprietary adapters may be avoided and storage traffic may run over a network shared by some or all of the different types of network traffic. The third type of network traffic may be handled by a third network traffic system that may include, for example, the Ethernet connector 410, the L2 NIC 430, the TCP processor 490, an iSCSI/remote-direct-memory access (RDMA) processor 500, the PCl bridge 440, the unified driver 450 and a SCSI miniport service 510. The Ethernet connector 410 may be coupled to the L2 NIC 430 which, in turn, may be coupled to the TCP processor 490. The TCP processor 490 may be coupled to the iSCSI/RDMA processor 500 which, in turn, may be coupled to the PCI bridge 440. The PCI bridge 440 may be coupled to the unified driver 450 which, in turn, may be coupled to the SCSI miniport service 510.

A fourth type of network traffic that the server 400 may handle may be, for example, IPC traffic. IPC networks may allow programs running on different servers to communicate quickly and without substantial overhead. IPC networks may be used with, for example, distributed applications, database servers and file servers. For example, IPC networks may be used when the requisite computing power exceeds the capacity of a particular server or when multiple servers are used for ultra-reliable operation. This type of service may be provided through an RDMA interface such as, for example, Winsock Direct that may directly interface with applications. The fourth type of network traffic may be handled by a fourth network traffic system that may include, for example, the Ethernet connector 410, the L2 NIC 430, the TCP processor 490, the iSCSI/RDMA processor 500, the PCl bridge 440, the unified driver 450 and an RDMA service 520 (e.g., Winsock Direct). The Ethernet connector 410 may be coupled to the L2 NIC 430 which, in turn, may be coupled to the TCP processor 490. The TCP processor 490 may be coupled to the iSCSI/RDMA processor 500 which, in turn, may be coupled to the PCl bridge 440. The PCl bridge 440 may be coupled to the unified driver 450 which, in turn, may be coupled to the RDMA service 520.

A fifth type of network traffic that the server 400 may handle may be, for example, any traffic relating to any type of operating system (OS) Agnostic Management Entity or device. These entities or devices may monitor the state of the server 400 and may transmit information relating to state and statistical values over the network. The fifth type of network traffic may be handled by a fifth network traffic system that may include, for example, the Ethernet connector 410, the L2 NIC 430, a server management agent 530 and a keyboard/video/mouse service 540. The fifth network traffic system may provide keyboard, video and mouse hardware services to the server 400 so that these interfaces may be redirected over the network to a central server management system (not shown). The Ethernet connector 410 may be coupled to the L2 NIC 430 which, in turn, may be coupled to the server Management agent 530. The server management agent 530 may be coupled to the keyboard/video/mouse service 540.

The present invention contemplates employing different levels of integration. For example, according to one embodiment of the present invention, a single integrated chip 550 may include, for example, one or more of the following: the L2 NIC 430, the TCP processor 490 and the iSCSI/RDMA processor 500. In another embodiment according to the present invention, software 560 may provide, for example, one or more of the following: the TCP processor 460, the socket service switch 470, the socket service 480, the unified driver 450, the SCSI miniport service 510, the RDMA service 520 and the keyboard/video/mouse service 540.

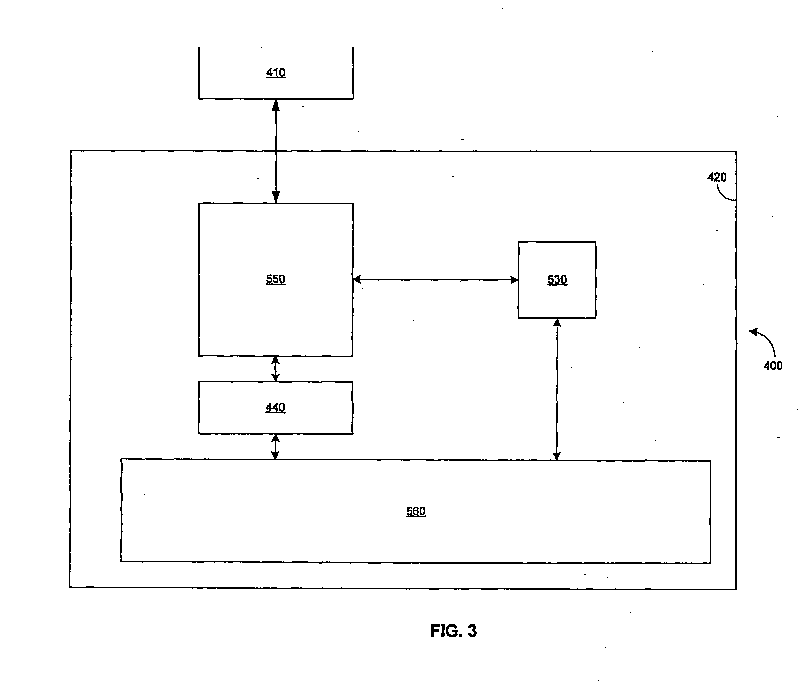

FIG. 3 shows a block diagram illustrating the server 400 with some integrated components according to the present invention. In one embodiment according to the present invention, the server enclosure 420 houses the single integrated chip 550, the server management agent 530, the PCl bridge 440 and the software 560. The single integrated chip 550 may be coupled to the Ethernet connector 410, the PCI bridge 440 and the server management agent 530. The PCI bridge 440 and the server management agent 530 may each be coupled to the software 560. Thus, the single integrated chip 550 may handle, for example, five types of network traffic through a single Ethernet connector 410. The single integrated chip 550 or the PCl bridge 440 may determine which of the five types of network traffic may access the software 560 including the unified driver 450 and the various services 480, 510, 520 and 540. Access to the software 560 may be achieved via a number of different techniques including, for example, time division multiplexing and dynamically allocating fixed resources between the different network types.

Some embodiments according to the present invention may include one or more of the advantages as set forth below.

Some embodiments according to the present invention may employ a single Ethernet connector 410. Some embodiments may overcome a difficulty in that some operating systems insist that each connector for each type of traffic have a different driver. Furthermore, other embodiments may avoid the use of a layer 3 (L3) level switch which would be required to combine connections because input traffic would have to be sorted by IP address and sent only to the particular adapter with the particular IP address that might handle that particular traffic.

Some embodiments according to the present invention may provide a unified data path and control path. Such a unified approach may provide substantial cost and space savings through the integration of different components.

Some embodiments according to the present invention may share a TCP stack between the different types of network traffic systems. Cost savings may result from the elimination of redundant logic and code.

Some embodiments according to the present invention may share packet buffer memory. The network traffic systems may share the receive (RX) and the transmit (TX) buffer memory resources since the network traffic systems share a common Ethernet connection.

Some embodiments according to the present invention may share a direct memory access (DMA) engine and buffering technologies. Some of the network traffic systems and protocols may share buffering strategies and thus the logic for the mapping may be shared. Furthermore, since the DMA traffic may use a single Ethernet connection, buffering strategies may share the same DMA structure.

Some embodiments according to the present invention may have similar NIC-to-driver and driver-to-NIC strategies. By using a common technique for both directions of indication, cost may be saved over separate implementations.

Some embodiments according to the present invention may use a single IP address. By combining multiple networks and functions into a single NIC, a single IP address may be employed to serve them all. This may substantially reduce the number of IP addresses used in complex server systems and also may simplify the management and configurations of such systems.

Some embodiments according to the present invention may provide pooling and/or dynamic allocation of connection context data. The pooling of connection context between different protocols may allow substantial reductions in the storage space used and may make possible storing of connection context in a memory-on-a-chip implementation. The memory-on-a-chip implementation may remove, for example, the pins/power complexity associated with external memory.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to cany out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

Therefore, it is intended that the present invention not be limited to the particular embodiment disclosed, but that the present invention will include all embodiments falling within the scope of the appended claims.

## Claims

1. A server (400), comprising:
an Ethernet connector (410);
a processor (550) coupled to the Ethernet connector, the processor being adapted to process a plurality of different types of network traffic;
a peripheral component interface bridge further referred as "PCI bridge" (440) coupled to the processor; and
a unified driver (450) coupled to the PCl bridge (440), the unified driver (450) being adapted to provide drivers associated with the plurality of different types of network traffic,
**characterized in that** the plurality of different types of network traffic comprises at least five types of network traffic, including at least two of common Ethernet traffic, offload traffic, storage traffic and interprocess communication traffic further referred as "IPC traffic", and wherein the PCl bridge (440) is adapted to determine which of the at least five types of network traffic may access a software (560) including the unified driver (450) and a plurality of services (480, 510, 520, 540) comprising at least two of a socket service (480), a SCSI miniport service (510), an RDMA service (520) and a keyboard and/or video and/or mouse service (540).

2. The server according to claim 1, wherein the common Ethernet traffic is handled by a first network traffic system which includes the Ethernet connector (410), a layer 2 network interface card (430), the PCI bridge (440), the unified driver (450), a software transmission control protocol processor (460), a socket service switch (470), and the socket service (480).

3. The server according to claim 1, wherein the offload traffic is handled by a second network traffic system which includes the Ethernet connector (410), a layer 2 network interface card (430), a transmission control protocol processor (490), the PCI bridge (440), the unified driver (450), a socket service switch (470) and the socket service (480).

4. The server according to claim 1, wherein the storage traffic is handled by a third network traffic system which includes the Ethernet connector (410), a layer 2 network interface card (430), a transmission control protocol processor (490), an iSCSI/remote-direct-memory access processor (500), the PCl bridge (440), the unified driver (450), and the SCSI miniport service (510).

5. The server according to claim 1, wherein the IPC traffic is handled by a fourth network traffic system which includes the Ethernet connector (410), a layer 2 network interface card (430), a transmission control protocol processor (490), an iSCSI/remote-direct-memory access processor (500), the PCl bridge (440), the unified driver (450), and the RDMA service (520).

6. The server according to claim 1, wherein traffic relating to any type of operating system Agnostic Management Entity or device is handled by a fifth network traffic system which includes the Ethernet connector (410), a layer 2 network interface card (430), a server management agent (530) and the keyboard/video/mouse service (540), wherein the any type of operating system Agnostic Management Entity or device is configured to monitor a state of the server.

7. The server according to claim 1, wherein the processor comprises a single integrated chip (550).

8. A method for network interfacing, comprising:
(a) handling a plurality of different types of network traffic via a Ethernet connector (410) ; providing , by a unified driver (450) coupled to a peripheral component interface bridge further referred as "PCi bridge " (440), drivers associated with the plurality of different types of network traffic ;
(b) processing the different types of network traffic in a single chip processor (550); and
(c) determining by the PCi bridge (440) which of different types of network traffic accesses software services via a single data path, **characterized in that**
the plurality of different types of network traffic comprises at least five types of network traffic, including at least two of common Ethernet traffic, offload traffic, storage traffic, interprocess communication traffic and management traffic, and wherein (c) determining which of the at least five types of network traffic may access a software (560) including the unified driver (450) and a plurality of services (480, 510. 520, 540) comprising at least two of a socket service (480), a SCSI miniport service (510), an RDMA service (520) and a keyboard and/or video and/or mouse service (540) is carried out by the PCl bridge (440).

9. The method according to claim 8, wherein the Ethernet connector (410) is a single L2 connector.

10. The method according to claim 8, wherein the step (c) comprises employing time division multiplexing to determine which of the different types of network traffic access the software services via the single data path.

## Patentansprüche

1. Server (400) mit:
- einem Ethernet-Anschluss (410),
- einem Prozessor (550), der mit dem Ethernet-Anschluss gekoppelt ist, wobei der Prozessor dafür ausgelegt ist, eine Mehrzahl unterschiedlicher Arten von Netzwerkverkehr zu verarbeiten,
- einer peripheren Komponentenschnittstellenbrücke (Peripheral Component Interface bridge), die im Folgenden als "PCI-Brücke" (440) bezeichnet wird und mit dem Prozessor gekoppelt ist, und
- einem einheitlichen Treiber (450), der mit der PCl-Brücke (440) gekoppelt ist, wobei der einheitliche Treiber (450) dafür ausgelegt ist, Treiber bereitzustellen, die der Mehrzahl unterschiedlicher Arten von Netzwerkverkehr zugeordnet sind,
- **dadurch gekennzeichnet, dass** die Mehrzahl unterschiedlicher Arten von Netzwerkverkehr mindestens fünf Netzwerkverkehrsarten umfasst, die mindestens zwei Netzwerkverkehrsarten einschließen, welche üblichen Ethernet-Verkehr, Offload-Verkehr, Speicherverkehr und Interprozesskommunikationsverkehr, welcher im Folgenden als "IPC-Verkehr" bezeichnet wird, umfassen, und wobei die PCl-Brücke (440) dafür ausgelegt ist, zu bestimmen, welche der mindestens fünf Netzwerkverkehrsarten auf eine Software (560) zugreifen kann, die den einheitlichen Treiber (450) und eine Mehrzahl Dienste (480, 510, 520, 540) umfasst, welche mindestens zwei Dienste einschließen, die einen Socket-Dienst (480), einen SCSI-Miniportdienst (510), einen RDMA-Dienst (520) und einen Tastatur- und/oder Video-und/oder Mausdienst (540) umfassen.

2. Server nach Anspruch 1,
wobei der übliche Ethernet-Verkehr von einem ersten Netzwerkverkehrssystem gehandhabt wird, das den Ethernet-Anschluss (410), eine Ebene-2-Netzwerkschnitt-stellenkarte (430), die PCI-Brücke (440), den einheitlichen Treiber (450), einen Software-Übertragungssteuerprotokollprozessor (460), einen Socket-Dienst-Switch (470) und den Socket-Dienst (480) umfasst.

3. Server nach Anspruch 1,
wobei der Offload-Verkehr von einem zweiten Netzwerkverkehrssystem gehandhabt wird, das den Ethernet-Anschluss (410), eine Ebene-2-Netzwerkschnittstellenkarte (430), einen Übertragungssteuerprotokollprozessor (490), die PCl-Brücke (440), den einheitlichen Treiber (450), einen Socket-Dienst-Switch (470) und den Socket-Dienst (480) umfasst.

4. Server nach Anspruch 1,
wobei der Speicherverkehr von einem dritten Netzwerkverkehrssystem gehandhabt wird, das den Ethernet-Anschluss (410), eine Ebene-2-Netzwerkschnittstellenkarte (430), einen Übertragungssteuerprotokollprozessor (490), einen iSCSI-Prozessor mit direktem Speicherfernzugriff (500), die PCl-Brücke (440), den einheitlichen Treiber (450) und den SCSI-Miniportdienst (510) umfasst.

5. Server nach Anspruch 1,
wobei der IPC-Verkehr von einem vierten Netzwerkverkehrssystem gehandhabt wird, das den Ethernet-Anschluss (410), eine Ebene-2-Netzwerkschnittstellenkarte (430), einen Übertragungssteuerprotokollprozessor (490), einen iSCSI-Prozessor mit direktem Speicherfernzugriff (500), die PCl-Brücke (440), den einheitlichen Treiber (450) und den RDMA-Dienst (520) umfasst.

6. Server nach Anspruch 1,
wobei Verkehr, der eine beliebige Art von Einheit oder Einrichtung mit einem Agnostic-Management-Betriebssystem betrifft, von einem fünften Netzwerkverkehrssystem gehandhabt wird, das den Ethernet-Anschluss (410), eine Ebene-2-Netz-werkschnittstellenkarte (430), einen Server-Management-Agenten (530) und den Tastatur-/Video-/Mausdienst (540) umfasst, wobei eine beliebige Art von Einheit oder Einrichtung mit einem Agnostic-Management-Betriebssystem dafür konfiguriert ist, den Zustand des Servers zu überwachen.

7. Server nach Anspruch 1,
wobei der Prozessor einen einzelnen integrierten Chip (550) umfasst.

8. Verfahren zur Netzwerkschnittstellenverbindung, das umfasst:
(a) Handhaben einer Mehrzahl unterschiedlicher Arten von Netzwerkverkehr über einen Ethernet-Anschluss (410), Bereitstellen, durch einen einheitlichen Treiber (450), der mit einer peripheren Komponentenschnittstellenbrücke (Peripheral Component Interface bridge) gekoppelt ist, die im Folgenden als "PCI-Brücke" (440) bezeichnet wird, von Treibern, die der Mehrzahl unterschiedlicher Arten von Netzwerkverkehr zugeordnet sind,
(b) Verarbeiten der unterschiedlichen Arten von Netzwerkverkehr in einem EinzelChip-Prozessor (550), und
(c) Bestimmen, durch die PCl-Brücke (440), welche der unterschiedlichen Netzwerkverkehrsarten über einen einzelnen Datenpfad auf Software-Dienste zugreift, **dadurch gekennzeichnet, dass**
die Mehrzahl unterschiedlicher Arten von Netzwerkverkehr mindestens fünf Netzwerkverkehrsarten umfasst, die mindestens zwei Netzwerkverkehrsarten einschließen, welche üblichen Ethernet-Verkehr, Offload-Verkehr, Speicherverkehr, Interprozesskommunikationsverkehr und Management-Verkehr umfassen, und wobei das Bestimmen (c), welche der mindestens fünf Netzwerkverkehrsarten auf eine Software (560) zugreifen kann, die den einheitlichen Treiber (450) und eine Mehrzahl Dienste (480, 510, 520, 540) umfasst, welche mindestens zwei Dienste einschließen, die einen Socket-Dienst (480), einen SCSI-Miniportdienst (510), einen RDMA-Dienst (520) und einen Tastatur- und/oder Video- und/oder Mausdienst (540) umfassen, von der PCl-Brücke (440) ausgeführt wird.

9. Verfahren nach Anspruch 8,
wobei der Ethernet-Anschluss (410) ein einzelner L2-Anschluss ist.

10. Verfahren nach Anspruch 8,
wobei der Schritt (c) die Verwendung eines Zeitmultiplexverfahrens umfasst, um zu bestimmen, welche der unterschiedlichen Netzwerkverkehrsarten über den einzelnen Datenpfad auf die Software-Dienste zugreift.

## Revendications

1. Serveur (400), comprenant :
un connecteur Ethernet (410) ;
un processeur (550) couplé au connecteur Ethernet, le processeur étant adapté à traiter une pluralité de types différents de trafic réseau ;
un pont d'interface de composants périphériques ci-après appelé « pont PCl » (440) couplé au processeur ; et
un pilote unifié (450) couplé au pont PCl(440), le pilote unifié (450) étant adapté à prévoir des pilotes associés avec la pluralité de types différents de trafic réseau,
**caractérisé en ce que** la pluralité de types différents de trafic réseau comprend au moins cinq types de trafic réseau, incluant au moins deux d'un trafic Ethernet commun, d'un trafic de délestage, d'un trafic de stockage et d'un trafic de communication interprocessus ci-après appelé « trafic IPC », et dans lequel le pont PCl (440) est adapté à déterminer lequel des au moins cinq types de trafic réseau peut accéder à un logiciel (560) incluant le pilote unifié (450) et une pluralité de services (480, 510, 520, 540) comprenant au moins deux d'un service d'interface de connexion (480), d'un service de miniport SCSI (510), d'un service RDMA (520) et d'un service de clavier et/ou de vidéo et/ou de souris (540).

2. Serveur selon la revendication 1, dans lequel le trafic Ethernet commun est géré par un premier système de trafic réseau qui inclut le connecteur Ethernet (410), une carte d'interface réseau de couche 2 (430), le pont PCl (440), le pilote unifié (450), un processeur de protocole de contrôle de transmission logiciel (460), un commutateur de service d'interface de connexion (470), et le service d'interface de connexion (480).

3. Serveur selon la revendication 1, dans lequel le trafic de délestage est géré par un deuxième système de trafic réseau qui inclut le connecteur Ethernet (410), une carte d'interface réseau de couche 2 (430), un processeur de protocole de contrôle de transmission (490), le pont PCI (440), le pilote unifié (450), un commutateur de service d'interface de connexion (470), et le service d'interface de connexion (480).

4. Serveur selon la revendication 1, dans lequel le trafic de stockage est géré par un troisième système de trafic réseau qui inclut le connecteur Ethernet (410), une carte d'interface réseau de couche 2 (430), un processeur de protocole de contrôle de transmission (490), un processeur d'accès à une iSC-SI/mémoire directe distante (500), le pont PCI (440), le pilote unifié (450), et le service de miniport SCSI (510).

5. Serveur selon la revendication 1, dans lequel le trafic IPC est géré par un quatrième système de trafic réseau qui inclut le connecteur Ethernet (410), une carte d'interface réseau de couche 2 (430), un processeur de protocole de contrôle de transmission (490), un processeur d'accès à une iSCSI/mémoire directe distante (500), le pont PCI (440), le pilote unifié (450), et le service RDMA (520).

6. Serveur selon la revendication 1, dans lequel le trafic se rapportant à un type quelconque d'Entité de Gestion Indépendante ou de dispositif de système d'exploitation est géré par un cinquième système de trafic réseau qui inclut le connecteur Ethernet (410), une carte d'interface réseau de couche 2 (430), un agent de gestion de serveur (530) et le service de clavier/vidéo/souris (540), dans lequel le type quelconque d'Entité de Gestion Indépendante ou de dispositif de système d'exploitation est configuré pour surveiller un état du serveur.

7. Serveur selon la revendication 1, dans lequel le processeur comprend une puce intégrée (550) unique.

8. Procédé de mise en interface réseau, comprenant :
(a) la gestion d'une pluralité de types différents de trafic réseau par l'intermédiaire d'un connecteur Ethernet (410) ; la prévision, par un pilote unifié (450) couplé à un pont d'interface de composants périphériques ci-après appelé « pont PCI » (440), des pilotes associés avec la pluralité de types différents de trafic réseau ;
(b) le traitement des types différents de trafic réseau dans un processeur (550) à puce unique ; et
(c) la détermination par le pont PCl (440) duquel des types différents de trafic réseau accède à des services logiciels par l'intermédiaire d'une voie de données unique, **caractérisé en ce que**
la pluralité de types différents de trafic réseau comprend au moins cinq types de trafic réseau, incluant au moins deux d'un trafic Ethernet commun, d'un trafic de délestage, d'un trafic de stockage et d'un trafic de communication interprocessus et d'un trafic de gestion, et
dans lequel la détermination (c) duquel des au moins cinq types différents de trafic réseau peut accéder à un logiciel (560) incluant le pilote unifié (450) et une pluralité de services (480, 510, 520, 540) comprenant au moins deux d'un service d'interface de connexion (480), d'un service de miniport SCSI (510), d'un service RDMA (520) et d'un service de clavier et/ou de vidéo et/ou de souris (540) est exécutée par le pont PCI (440).

9. Procédé selon la revendication 8, dans lequel le connecteur Ethernet (410) est un connecteur L2 unique.

10. Procédé selon la revendication 8, dans lequel l'étape (c) comprend l'emploi d'un multiplexage par répartition dans le temps pour déterminer lequel des types différents de trafic réseau accède aux services logiciels par l'intermédiaire de la voie de données unique.
